# FASCICULE DE BREVET EUROPEEN

(11) **EP 0 545 819 B1**
(45) Date de publication et mention de la délivrance du brevet: **10.07.1996**
(21) Numéro de dépôt: 92403263.4
(22) Date de dépôt: 03.12.1992
(51) Int. Cl.: C08G 73/02, H01B 1/12

(54) **Copolymères à propriétés magnétiques**
Copolymere mit magnetischen Eigenschaften
Copolymers with magnetic properties

(30) Priorité: 06.12.1991 FR 9115182
(43) Date de publication de la demande: 09.06.1993
(73) Titulaire: ALCATEL ALSTHOM COMPAGNIE GENERALE D'ELECTRICITE (abrégé: ALCATEL ALSTHOM), F-75382 Paris Cédex 08 (FR)
(72) Inventeur: Galaj, Stanislas, F-94110 Arcueil (FR); Le Mehaute, Alain, F-91190 Gif sur Yvette (FR)
(74) Mandataire: Weinmiller, Jürgen, Dipl.-Ing.

(56) Documents cités:
- WO-A-90/10297
- DE-A- 3 716 284
- US-A- 4 874 481
- US-A- 5 008 041
- PATENT ABSTRACTS OF JAPAN vol. 12, no. 482 (C-553)15 Décembre 1988 ; & JP-A-63 199 741
- PATENT ABSTRACTS OF JAPAN vol. 13, no. 348 (E-799)4 Août 1989 ; & JP-A-11 08 780

## Description

La présente invention concerne des copolymères à propriétés magnétiques comprenant des groupes aminoaromatiques. Elle s'étend en outre à des procédés de préparation et à des applications de ces copolymères.

De nouvelles polyanilines auto-dopées, dont les noyaux benzéniques et/ou quinoniques portent des greffons fonctionnalisés ou substituants tels que leurs fonctions terminales, du type générateur de protons, soient séparées du noyau par au moins trois atomes, ainsi que leur procédé de préparation, ont fait l'objet de la demande de brevet français n° 91 05578 du 7 mai 1991 de la demanderesse. Ces polyanilines possèdent des propriétés électro-magnétiques intéressantes et notamment des paramètres de propagation, d'impédance électromagnétique, et des constantes de propagation, permettant leur application dans le domaine des hyperfréquences.

Ces polyanilines sont susceptibles de conserver leurs propriétés au voisinage de 170°C pendant quelques minutes ou de 130°C pendant plusieurs heures, ce qui autorise leur mise en oeuvre dans les machines d'extrusion et, de manière générale, de plasturgie. Les polyanilines se décomposent au-dessus de 180°C, avec formation intermédiaire de sulfamides quand le greffon comporte un substituant sulfonique.

Les propriétés électro-magnétiques de ces polyanilines sont cependant encore insuffisantes pour diverses applications.

La présente invention a pour but de procurer des copolymères présentant des propriétés magnétiques, notamment une aimantation à saturation, et une stabilité thermique améliorée.

Les copolymères à propriétés magnétiques selon l'invention, comprennent des groupes aminoaromatiques à base d'un motif élémentaire comprenant:
- un premier groupe de composés aminoaromatiques choisis parmi les dérivés de l'aniline et les formes iminoquinoniques correspondantes,
- un second groupe de composés aminoaromatiques substitués choisis parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants.

De préférence, les copolymères sont à base dudit motif élémentaire comprenant ledit premier groupe appelé B et ledit second groupe appelé C, lesdits groupes B et C pouvant être sous la forme aminoaromatique ou sous la forme iminoquinonique correspondante, et répondent à la formule générale:

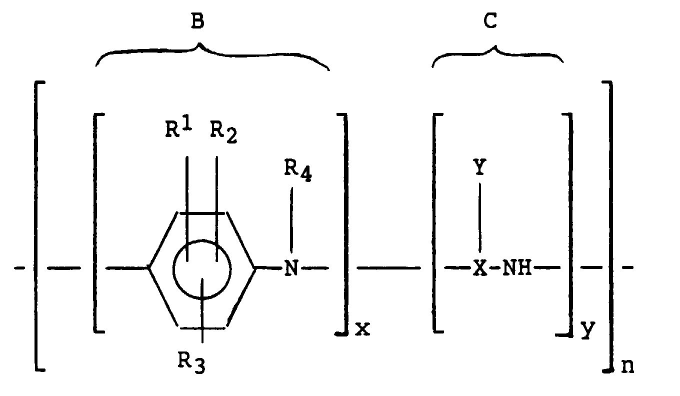

Dans ledit groupe B, Rᵢ, où i= 1, 2, et 3 (R₁, R₂, et R₃), est choisi parmi l'hydrogène, le radical -CF₃, et un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels, comme par exemple un radical sulfonique ou carboxylique porté ou non par une chaine alkyle ou alcoxyalkyle.

Dans ledit groupe B, R₄ est choisi parmi l'hydrogène, un radical alkyle, un radical aryle, et leurs dérivés.

Dans ledit groupe C, X est choisi parmi un noyau polyaromatique à au moins deux noyaux benzéniques condensés, un noyau polycyclique, et un noyau aromatique portant un substituant relié au noyau par un maillon éthynylidène ou phénylène.

Dans ledit groupe C, Y est au moins un substituant choisi parmi un substituant nitro, nitroso, fluoro, chloro, bromo, alkyle et alcoxyalkyle, porté ou non par une chaine alkyle ou alcoxyalkyle, et parmi un substituant sulfonique, phosphonique et carboxylique.

Dans ladite formule générale, x et y sont des entiers peu élevés compris entre 1 et 3, et n est un entier supérieur à 6 le plus élevé possible.

De préférence, X est un noyau naphtalène.

Selon un mode de réalisation, les copolymères sont dopés donc conducteurs. Suivant les monomères utilisés, les copolymères selon l'invention peuvent être auto-dopés, mais dans le cas contraire, on peut les doper afin de les rendre conducteurs. Par ailleurs, la corrélation d'échange sur les électrons portant des spins opposés suggère qu'il existe dans le diagramme de phase une zone correspondant à la constitution de paires de COOPER, domaine dans lequel les polymères sont supraconducteurs. Cette propriété est mise en évidence par le comportement diamagnétique du copolymère à basse température.

En moyenne il est avantageux que, dans la formule générale, un quart desdits groupes B et/ou C se trouvent sous forme quinonique, on obtient dans ce cas la conductivité maximale pour le copolymère, et que la moitié desdits groupes C soit de type aminoaromatique substitué, et l'autre moitié de type iminoquinonique substitué.

Avantageusement, dans ladite formule générale, y=1 et x=1, la liaison X-Y est rigide, certaines liaisons internes sont ainsi privilégiées, et Y est au moins un substituant donneur de proton, dans ce cas les copolymères sont principalement ferromagnétiques.

De préférence, Y est choisi parmi un substituant sulfonique, phosphonique ou carboxylique.

De préférence encore, ledit groupe C est choisi parmi les acides de CLEVE: acide 8-amino-2-naphtalènesulfonique (forme θ) et acide 5-amino-2-naphtalènesulfonique (forme β), l'acide de LAURENT: acide 1-amino-5-naphtalènesulfonique, l'acide de PERI: acide l-amino-8-naphtalènesulfonique, et les diacides: acide 1-naphtylamino-5,7-disulfonique et acide 1-naphtylamino-6,8-disulfonique.

Le procédé de fabrication du copolymère selon l'invention comprend une première étape de copolymérisation en solution ou suspension
- d'un premier monomère qui est une aniline éventuellement substituée par le radical -CF₃, ou par un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels,
- et d'un second monomère qui est un composé aminoaromatique substitué choisi parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants, et une seconde étape de séparation du copolymère obtenu, de la solution ou suspension.

Il répond en outre de préférence à au moins l'une des caractéristiques suivantes:
- la copolymérisation est effectuée en milieu aqueux acide choisi parmi les solutions aqueuses d'acide sulfurique, d'acide paratoluènesulfonique, d'acide formique, et d'acide phosphorique;
- on effectue la copolymérisation en ajoutant lentement au mélange des monomères en milieu acide une solution d'un agent oxydant;
- de préférence, l'oxydant est un composé du groupe comprenant les persulfates, les bichromates, les chromates, les iodates, les permanganates, et l'eau oxygénée;
- selon une variante, l'oxydation est effectuée en présence d'une électrode active sous tension et/ou d'un catalyseur, ceci permet d'ajuster le taux d'oxydation du copolymère;
- après séparation, par filtration et lavage, du copolymère obtenu du milieu réactionnel, on extrait par mise en solution ammoniacale du copolymère une phase soluble, puis on recristallise en partie le copolymère par évaporation de la solution ammoniacale; cette étape a pour but d'éliminer les impuretés insolubles du polymère et de régulariser sa texture.

Selon une variante du procédé, cette dernière opération est également réalisée en utilisant de l'ammoniac liquide anhydre.

Selon une procédé de mise en forme du copolymère selon l'invention:
- le copolymère est mis en suspension ou en solution pour former un ferro-fluide; confiné dans un champ magnétique, il peut être utilisé par exemple comme joint magnétique;
- le copolymère, où Y est donneur de proton, est salifié par une base volumineuse tel qu'une hydroxyde de tétraalkylammonium; cette opération a pour but de rendre le polymère fusible pour permettre sa mise en forme en couche mince;
- le copolymère est mis en suspension ou en solution puis déposé en couche mince;
- le dépôt en couche mince est effectué entre au moins deux couches magnétiques différentes de la couche déposée, qui sont choisies parmi les couches diamagnétiques, ferromagnétiques, ferrimagnétiques, et paramagnétiques;
- la couche mince est de dimension nanométrique.

Les copolymères de l'invention se prêtent à de nombreuses applications du fait de leurs fortes propriétés magnétiques. On peut les recristalliser en partie en couche mince sur des supports, comme le polyéthylène, le polychlorure de vinyle, le polyméthacrylate de méthyle, les polycarbonates, les résines époxydes. Ils peuvent à ce titre servir de support d'information écrite, notamment pour billets ou cartes bancaires, mais également comme supports photographiques ou radiographiques.

Le dépôt peut s'effectuer en une ou plusieurs couches minces, éventuellement séparées par des couches diamagnétiques ou des couche ferro, ferri, ou paramagnétiques différentes de la couche de recristallisation. L'épaisseur de la couche de dépôt peut être extrêmement faible, de l'ordre du nanomètre, ce qui permet son application dans diverses techniques de microscopie, les microscopes tunnel, les microscopes à force atomique, les microscopes en champ proche et les microscopes à onde évanescente.

Ces copolymères trouvent très généralement des applications dans les dispositifs hyperfréquences, notamment les guides d'ondes, les circulateurs, les polariseurs, les absorbants, les blindages et les filtres.

Ils conviennent également dans des systèmes optiques, notamment les écrans d'affichage, les systèmes dichroïques, de diffraction ou d'absorption de rayons X, ou de multiplexage sur fibres optiques.

Ils sont utilisables d'une façon générale dans les systèmes électro-magnéto-optiques et électro-magnéto-résistifs.

Ils permettent un ajustement de leurs propriétés magnétiques pour l'utilisation dans des dispositifs de contrôle du magnétisme, cet ajustement peut être réalisé par voie chimique à l'aide d'une structure catalytique, par voie électrochimique, par voie mécanique au moyen de la pression, notamment à l'aide d'un matériau piézoélectrique, ou par voie thermique.

Ils permettent l'obtention d'adhésifs ou de joints magnétiques.

De manière plus générale, ils sont applicables dans l'appareillage électrique, tels que moteurs, transformateurs, inducteurs, où ils permettent l'emploi de matériaux magnétiques non métalliques.

D'autres caractéristiques et avantages de la présente invention apparaitront à la lecture des exemples suivants de modes de réalisation, donnés bien entendu à titre illustratif et non limitatif, en référence au dessin annexé sur lequel:
- la figure 1 montre les courbes d'analyse thermique différentielle et d'analyse thermogravimétrique à l'air d'un copolymère selon l'invention;
- la figure 2 est analogue à la figure 1 mais les analyses sont réalisées sous argon.

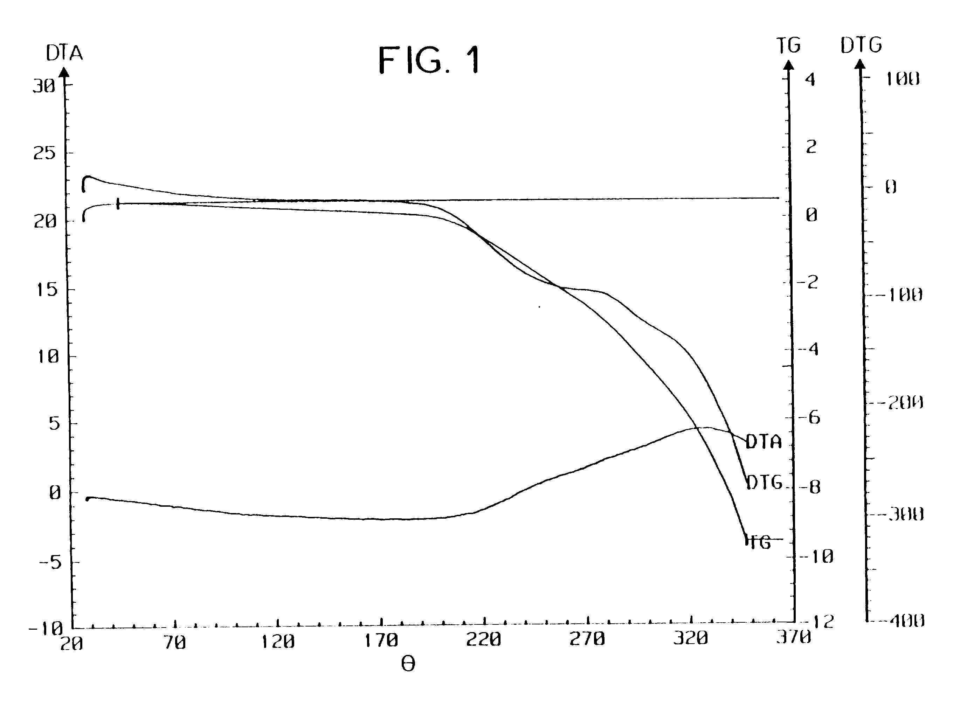

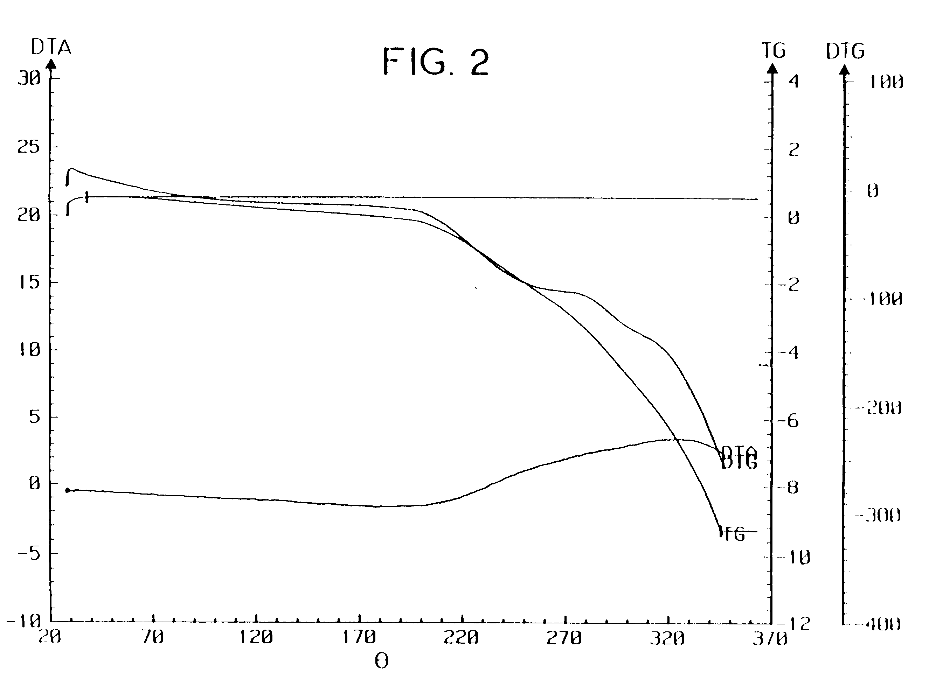

Sur les figures 1 et 2, la dérivée de la température différentielle DTA (en µVolts) est donnée en ordonné à gauche, et en ordonnée à droite la perte de poids TG en % et sa dérivée DTG (en µVolts); la température θ en degrés Kelvin est en abcisse; la droite horizontale supérieure représente le poids de l'échantillon de référence.

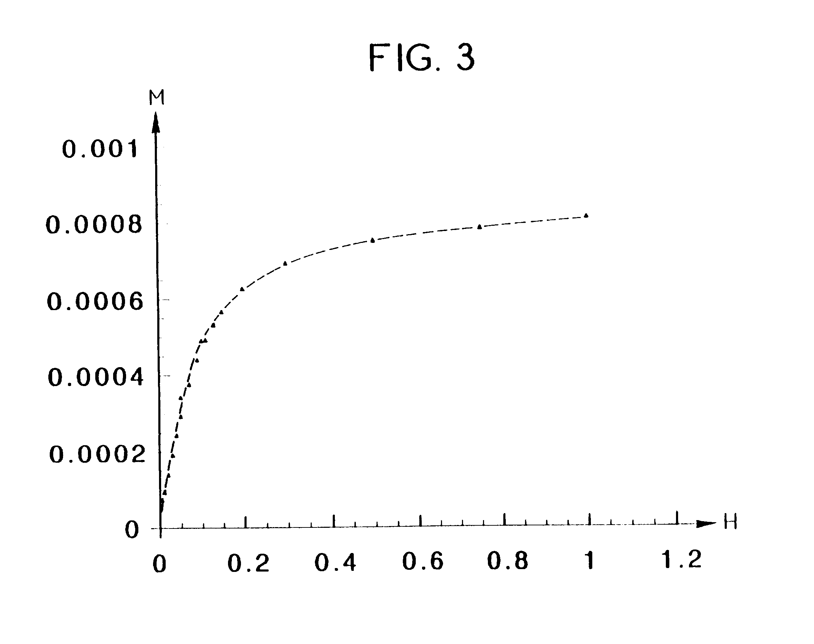

- la figure 3 est une courbe de première aimantation représentant la variation du signal magnétique M en fonction du champ H pour une température de 10K;

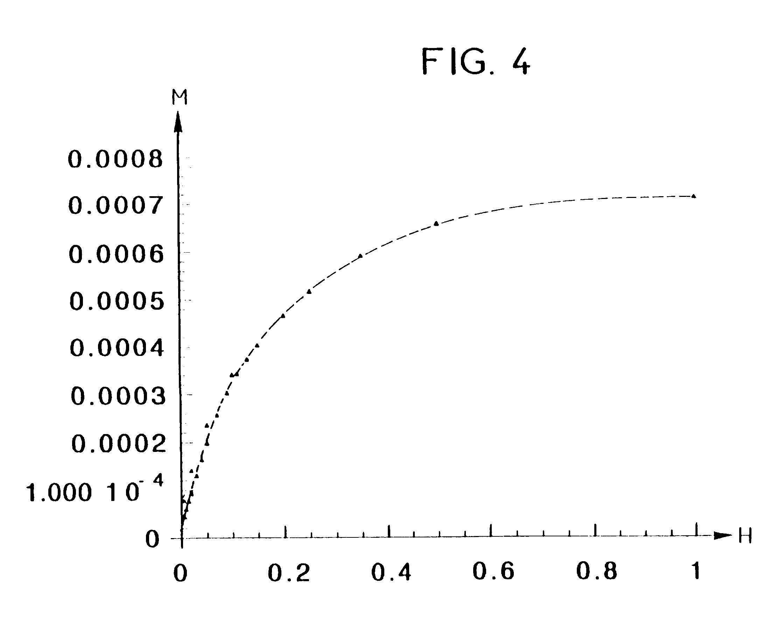

- la figure 4 est analogue à la figure 3 pour une température de 100K;

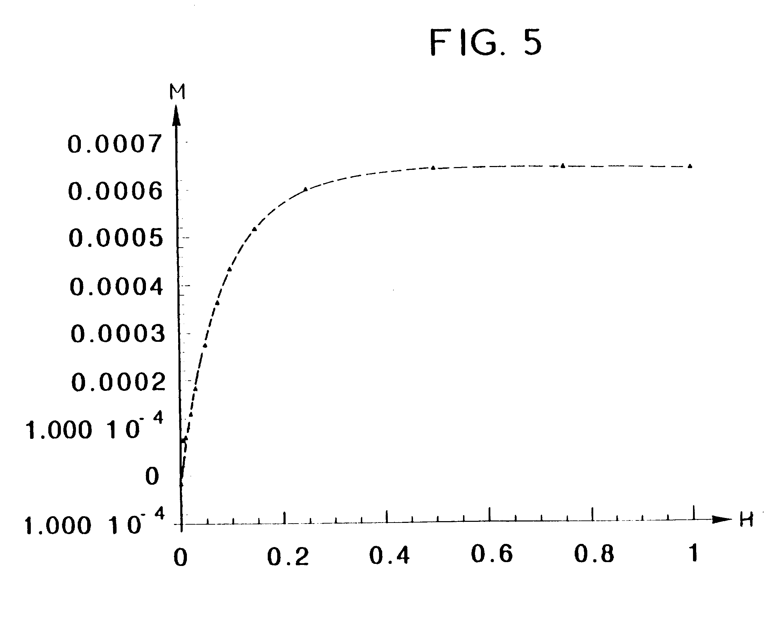

- la figure 5 est analogue à la figure 3 pour une température de 280K;

Sur les figures 3 à 5, le champ H en Tesla est donné en abcisse, et en ordonné le signal M, qui représente la variation d'aimantation, est donné en unités relatives.

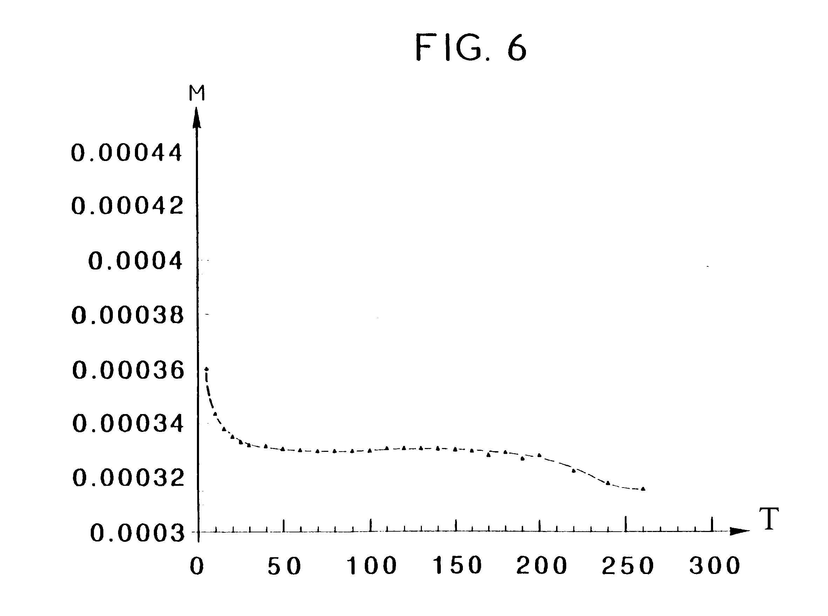

- la figure 6 représente la variation du signal magnétique M en fonction de la température absolue T en Kelvin pour un champ de 1000 Gauss (0,1 Tesla).

Sur la figure 6, la tempérarature absolue T en Kelvin est donnée en abcisse, et en ordonné le signal M en unités relatives.

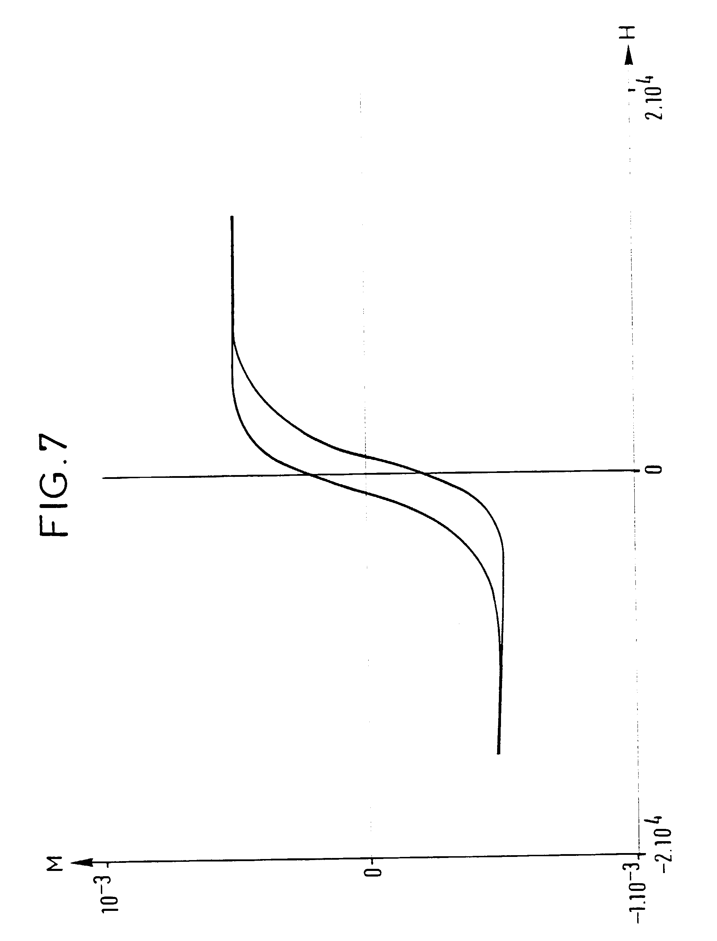

- la figure 7 représente la variation du signal magnétique M en fonction de la variation cyclique du champ H pour un copolymère ferromagnétique,

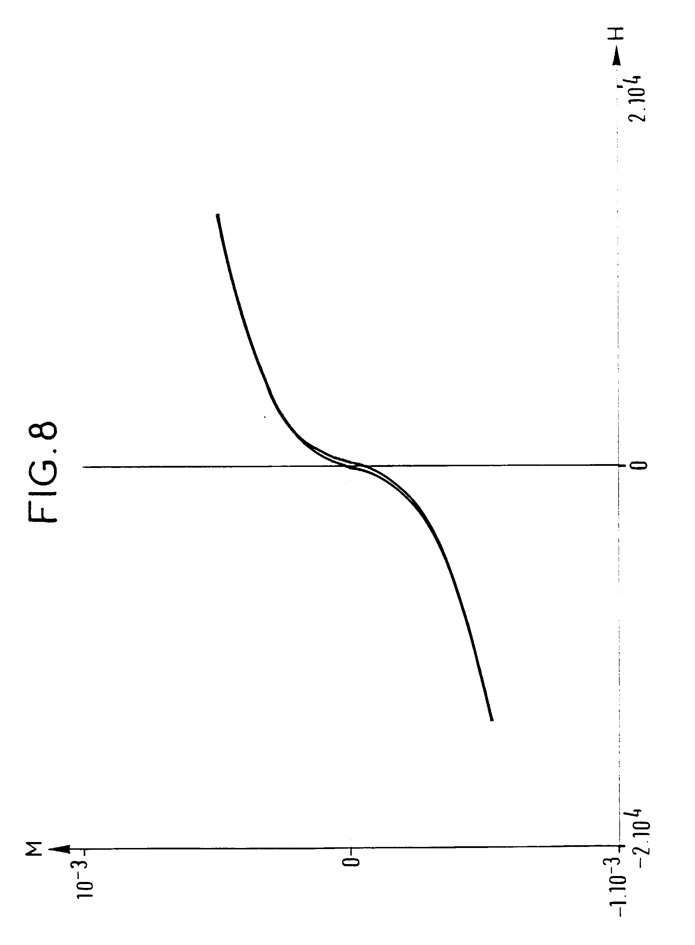

- la figure 8 est analogue à la figure 7 pour un copolymère présentant un caractère mixte ferromagnétique/paramagnétique.

Sur les figures 7 et 8, le champ magnétique H en Oersted est donné en abcisse, et en ordonnée le signal M en unités relatives.

### EXEMPLE 1

Dans un erlenmeyer de 250ml, on effectue un mélange contenant 10g d'acide 5-amino-2-naphtalénesulfonique, 4,2g d'aniline, 20ml d'acide sulfurique à 96% et 100ml d'eau, le tout maintenu sous agitation aux environs de 20°C. On ajoute goutte à goutte pendant 24 h une solution oxydante de 7,25g d'iodate de potassium dans 180ml d'eau. Il se forme une poudre que l'on filtre, lave et sèche. On obtient 8g de poudre.

On prélève 1g de cette poudre, que l'on traite par l'ammoniaque et que l'on filtre. Le résidu non soluble est stocké. On évapore le filtrat bleu foncé, qui donne des paillettes vertes et bleues, et on sèche quelques secondes par un soufflant à air chaud. Les paillettes obtenues sont ferromagnétiques, de formule générale:

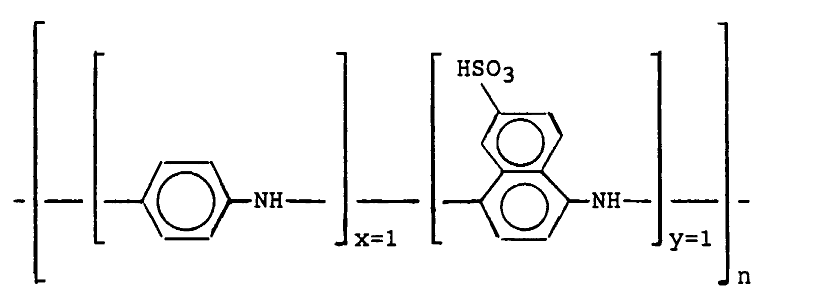

Le produit obtenu a été traité thermiquement, successivement à 130°C (1h), 150°C (1/2h) et 170°C (1/2h), sans que les observations associées à ses propriétés magnétiques à température ambiante soient affectées.

Afin de vérifier la stabilité thermique du copolymère, on a effectué des essais d'analyse thermique différentielle et d'analyse thermogravimétrique sur des échantillons de ce copolymère. Les résultats de ces essais sont représentés sur les figures 1 et 2 du dessin, qui donnent le comportement thermique des matériaux à l'air et sous argon, en opérant dans les conditions suivantes:

| | FIG.1 | FIG.2 |
|---|---|---|
| Poids de l'échantillon | 99,90mg | 101,10mg |
| Echantillon de référence (Kaolin) | 99,90mg | 99,80mg |
| Creuset | alumine | alumine |
| Milieu | air | argon |

Il a été effectué des mesures d'aimantation sur le produit obtenu selon la méthode dite du "SQUID" (Superconducting QUantum Interference Device), consistant à disposer le produit dans un tube, puis à remonter le tube à l'intérieur d'une bobine supraconductrice et à compter le nombre de magnétons de Bohr qui transitent. Les résultats des mesures sont reproduits dans les courbes des figures 3 à 6. Les figures 3, 4 et 5 représentent la variation du signal magnétique M en fonction du champ pour des températures de 10K, 100K et 280K. La figure 6 représente la variation du signal magnétique M en fonction de la température absolue pour un champ de 1000 Gauss.

Le calcul de l'aimantation à saturation de cet échantillon fait apparaître qu'elle est de l'ordre de 10 unités électromagnétiques Gauss/gramme, valeur beaucoup plus élevée que celles obtenues jusqu'alors pour un composé organique.

Une étude de la variation, en fonction de la température, de l'aimantation à saturation sous 1000 Gauss fait apparaître l'existence d'un ferromagnétisme jusqu'à des températures supérieures à l'ambiante. Elle révèle par ailleurs l'existence d'une transition d'ordre (diamagnétique/ferromagnétique) à 170 K. Elle permet d'évaluer la température de Curie au voisinage de 350K (77°C).

Un essai complémentaire de susceptométrie confirme l'existence du ferromagnétisme à température ambiante avec des valeurs positives de la constante d'expression de la perméabilité magnétique en fonction du rapport induction/champ, de termes réels voisin de 0,14.10⁻⁴ à 120K. Il révèle également une transition d'ordre à 170K.

### EXEMPLE 2

Dans un erlenmeyer de 250ml contenant un mélange en agitation, composé de 10g d'acide 5-amino-2-naphtalènesulfonique et 75ml d'acide chlorhydrique à 10%, on ajoute le cinquième d'une solution L composée de 4,2g d'aniline dans 25ml d'acide chlorhydrique à 10%. La mélange réactionnel est maintenu aux environs de 20°C. On ajoute goutte à goutte pendant 1 heure le cinquième d'une solution P composée de 7,25g d'iodate de potassium dans 180ml d'eau.

Une fois cet ajout terminé, on remet le second cinquième de la solution L dans l'erlenmeyer et ajoute goutte à goutte pendant 1 heure le second cinquième de la solution P. Cette opération est répétée trois fois.

Le copolymère est mis en solution dans l'ammoniaque concentrée (de densité 0,895). On sépare alors une phase soluble, constituée d'une proportion importante de copolymères à channe riche en groupes naphtaléniques, et une phase insoluble, principalement constituée d'une chaîne polyaniline comprenant une faible proportion de groupes naphtaléniques. On recueille alors la phase soluble qui après évaporation et séchage donne des paillettes de couleur bleu outre-mer, qui se déplacent dans un faible champ magnétique. Le produit obtenu est ferromagnétique et sa formule générale est:

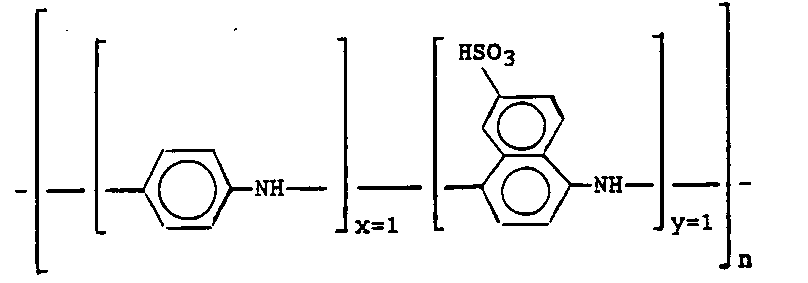

Ce produit peut être déposé en couche mince sur des substrats tels que le polyméthyl-méthacrylate, le verre, etc...

### EXEMPLE 3

On répète le mode opératoire de l'exemple 2 avec 5g de 1-aminonaphtalène et 4,2g d'aniline. On obtient 2,2g de copolymère paramagnétique de formule générale:

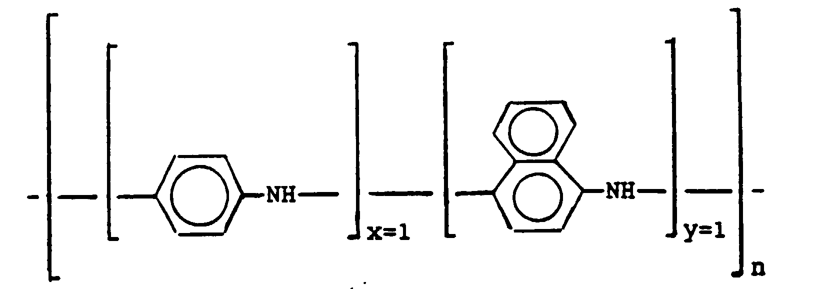

Ce copolymère n'est pas conducteur à cause de l'absence de groupement acide.

### EXEMPLE 4

Dans un erlenmeyer de 50ml contenant un mélange en agitation, composé de 10ml d'eau, 1ml d'acide sulfurique concentré, 0,42mg d'aniline, et 10g d'acide 5-amino-2-naphtalènesulfonique, on ajoute goutte à goutte pendant 3 h à température ambiante, une solution composée de 0,725g d'iodate de potassium, 25ml d'eau, et 1ml d'acide sulfurique concentrée. Au bout de 30 minutes après la fin de l'ajout, la suspension est centrifugée, puis le culot est redispersé dans plusieurs solutions de lavage avant d'être de nouveau centrifugé. Après séchage sous vide, on obtient 70mg de poudre vert foncé, de formule générale:

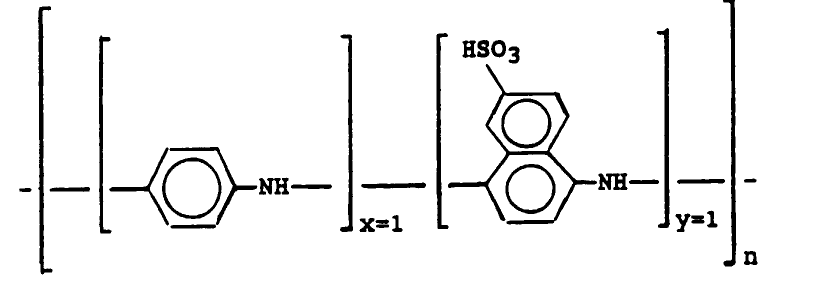

Son l'analyse, effectuée à 300K au moyen d'un magnétomètre à gradient de champ alternatif, montre qu'elle est ferromagnétique et présente un champ coercitif important (champ magnétique externe maximum n'entrainant pas de désaimantation) voisin de 1000 Oersteds comme le montre la figure 7.

### EXEMPLE 5

Dans un bécher de 25ml contenant 0,825g de N-phényl-paraphénylène diamine (dimère de l'aniline), 1g d'acide 5-amino-2-naphtalènesulfonique, 10ml d'acide formique, et 2g d'acide paratoluènesulfonique, on ajoute par petites pincées 2,78g peroxodisulfate d'ammonium en poudre. Le milieu réactionnel est agité et maintenu à température ambiante pendant l'ajout. Environ 10 minutes après la fin de l'ajout, le culot est séparé du milieu réactionnel par centrifugation et lavages. Après séchage, on obtient 1,584g d'une poudre vert foncé conductrice et paramagnétique, de formule générale.

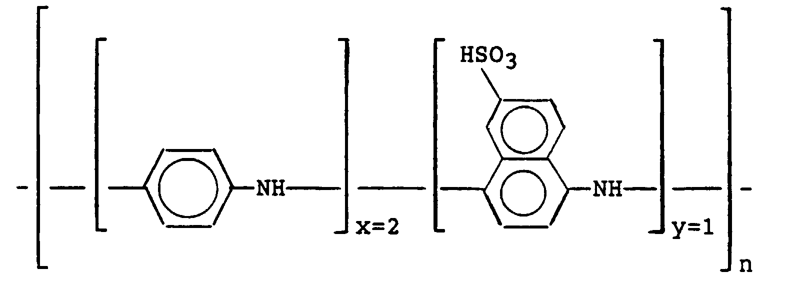

### EXEMPLE 6

Dans un bécher de 25ml contenant 0,42g de N-phényl-paraphénylène diamine (dimère de l'aniline), et 10ml d'acide formique, on verse une solution composée de 0,5g d'acide 5-amino-2-naphtalènesulfonique, 5ml d'eau et 1ml d'ammoniaque concentré (d=0,89). La suspension formée est vigoureusement agitée à température ambiante. On y ajoute alors 0,6ml d'eau oxygénée à 30%. Après 5 minutes de réaction, on procède comme dans l'exemple 5 pour la récupération et le lavage du copolymère. Celui-ci a pour formule générale:

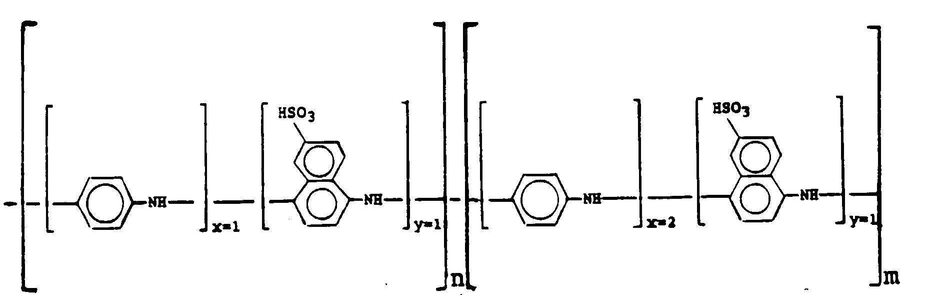

La poudre noirâtre obtenue (80mg) présente un caractère mixte ferromagnétique/paramagnétique fort à 300K. Le champ coercitif est voisin de 70 Oersteds comme le montre la figure 8.

## Revendications

1. Copolymères à propriétés magnétiques comprenant des groupes aminoaromatiques, caractérisés en ce que qu'ils sont à base d'un motif élémentaire comprenant:
- un premier groupe de composés aminoaromatiques choisis parmi les dérivés de l'aniline et les formes iminoquinoniques correspondantes,
- un second groupe de composés aminoaromatiques substitués choisis parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants.

2. Copolymères selon la revendication 1, caractérisés en ce qu'ils sont à base dudit motif élémentaire comprenant ledit premier groupe B et ledit second groupe C, lesdits groupes B et C pouvant être sous la forme aminoaromatique ou sous la forme iminoquinonique correspondante, et qu'ils répondent à la formule générale: 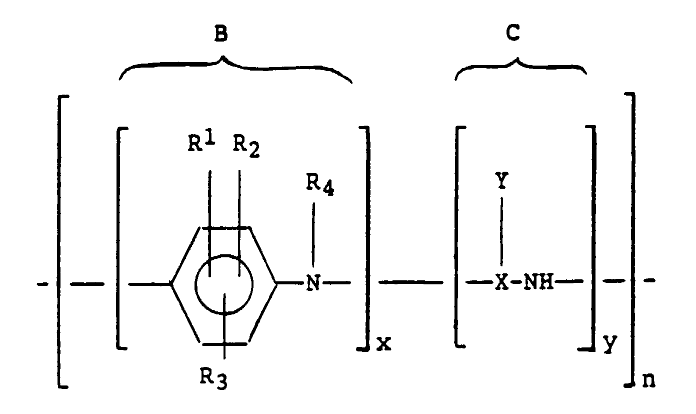 où, dans ledit groupe B:
- Rᵢ, où i= 1, 2, et 3, est choisi parmi l'hydrogène, le radical -CF₃, et un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels,
- et R₄ est choisi parmi l'hydrogène, un radical alkyle, un radical aryle, et leurs dérivés, dans ledit groupe C:
- X est choisi parmi un noyau polyaromatique à au moins deux noyaux benzéniques condensés, un noyau polycyclique, et un noyau aromatique portant un substituant relié au noyau par un maillon éthynylidène ou phénylène,
- et Y est au moins un substituant choisi parmi les substituants nitro, nitroso, fluoro, chloro, bromo, alkyle et alcoxyalkyle, porté ou non par une chaine alkyle ou alcoxyalkyle, et parmi les substituants sulfoniques, phosphoniques et carboxyliques, et dans ladite formule générale:
- x et y sont des entiers compris entre 1 et 3,
- et n est un entier supérieur à 6, et le plus élevé possible.

3. Copolymères selon l'une des revendications 1 et 2, caractérisés en ce que X est un noyau naphtalène.

4. Copolymères selon l'une des revendications précédentes, caractérisés en ce qu'ils sont dopés donc conducteurs.

5. Copolymères selon l'une des revendications précédentes, caractérisés en ce que, en moyenne, un quart desdits groupes B et/ou C se trouvent sous forme quinonique.

6. Copolymères selon l'une des revendications précédentes, caractérisés en ce que, en moyenne, la moitié desdits groupes C est de type aminoaromatique substitué, et l'autre moitié est de type iminoquinonique substitué.

7. Copolymères selon l'une des revendications précédentes, caractérisés en-ce que, dans ladite formule générale, y=1 et x=1, la liaison X-Y est rigide, Y est au moins un substituant donneur de proton, et que lesdits copolymères sont principalement ferromagnétiques.

8. Copolymères selon la revendication 7, caractérisés en ce que Y est choisi parmi un substituant sulfonique, phosphonique, et carboxylique.

9. Copolymères selon l'une des revendications 7 et 8, caractérisés en ce que ledit groupe C est choisi parmi:
l'acide 8-amino-2-naphtalènesulfonique,
l'acide 5-amino-2-naphtalènesulfonique,
l'acide 1-amino-5-naphtalènesulfonique,
l'acide 1-amino-8-naphtalènesulfonique,
l'acide 1-naphtylamino-5,7-disulfonique,
et l'acide 1-naphtylamino-6,8-disulfonique.

10. Procédé de fabrication des copolymères selon l'une des revendications précédentes, caractérisé en ce qu'il comprend une première étape de copolymérisation en solution ou suspension
- d'un premier monomère qui est une aniline éventuellement substituée par le radical -CF₃, ou par un substituant de formule -A-Z, dans laquelle A est un radical hydrocarboné de 2 à 8 atomes de carbone dans lequel est inséré au moins un hétéroatome choisi parmi O et S, et Z est au moins un substituant donneur de proton ou un de ses sels,
- et d'un second monomère qui est un composé aminoaromatique substitué choisi parmi les composés aminés substitués comprenant au moins deux noyaux benzéniques condensés, les composés polycycliques substitués comprenant au moins un motif aniline dans leur structure, les composés dérivés de l'aniline portant un substituant relié au noyau par un maillon éthynylidène ou paraphénylène, et les composés iminoquinoniques correspondants,
et une seconde étape de séparation du milieu réactionnel du copolymère obtenu.

11. Procédé selon la revendication 10, caractérisé en ce que la copolymérisation est effectuée en milieu aqueux acide choisi parmi !es solutions aqueuses d'acide sulfurique, d'acide paratoluènesulfonique, d'acide formique, et d'acide phosphorique.

12. Procédé selon l'une des revendications 10 et 11, caractérisé en ce que l'on effectue la copolymérisation en ajoutant lentement au mélange des monomères en milieu acide une solution d'un agent oxydant.

13. Procédé selon la revendication 12, caractérisé en ce que ledit agent oxydant est un composé du groupe comprenant les persulfates, les bichromates, les chromates, les iodates, les permanganates, et l'eau oxygénée.

14. Procédé selon l'une des revendications 10 à 13, caractérisé en ce que l'oxydation est effectuée en présence d'une électrode active sous tension et/ou d'un catalyseur.

15. Procédé selon l'une des revendications 10 à 14, caractérisé en ce que la cristallisation est effectuée sous champ magnétique ou/et électrique.

16. Procédé selon l'une des revendications 10 à 15, caractérisé en ce qu'après séparation, par filtration et lavage, dudit copolymère obtenu du milieu réactionnel, on extrait, par mise en solution ammoniacale dudit copolymère, une phase soluble, puis, par évaporation de la solution ammoniacale, on recristallise en partie ledit copolymère.

17. Procédé selon l'une des revendications 10 à 15, caractérisé en ce qu'après séparation dudit copolymère obtenu du milieu réactionnel, on extrait dudit copolymère par l'ammoniac liquide anhydre une phase soluble, puis on recristallise ledit copolymère par évaporation de l'ammoniac.

18. Procédé de mise en forme des copolymères selon les revendications 1 à 9, caractérisé en ce que ledit copolymère est mis en suspension ou en solution pour former un ferro-fluide.

19. Procédé de mise en forme des copolymères selon les revendications 1 à 9, caractérisé en ce que ledit copolymère porteur d'un substituant Y donneur de proton est salifié par une base volumineuse tel qu'un hydroxyde de tétraalkylammonium.

20. Procédé de mise en forme des copolymères selon les revendications 1 à 9, caractérisé en ce que ledit copolymère est par partie cristallisé en couche mince.

21. Procédé selon la revendication 20, caractérisé en ce que la recristallisation en couche mince est effectuée entre au moins deux couches magnétiques différentes de la couche déposée, lesdites couches étant choisies parmi les couches diamagnétiques, ferromagnétiques, ferrimagnétiques, et paramagnétiques.

22. Procédé selon l'une des revendications 20 et 21, caractérisé en ce que la couche mince est de dimension nanométrique.

23. Application des copolymères selon les revendications 1 à 9, aux supports.

24. Application selon la revendication 23, aux supports photographiques et radiographiques.

25. Application des copolymères selon l'une des revendications 1 à 9, aux microscopes tunnel, aux microscopes à force atomique, aux microscopes en champ proche et aux microscopes à onde évanescente.

26. Application des copolymères selon l'une des revendications 1 à 9, aux dispositifs hyperfréquences, notamment aux guides d'ondes, aux circulateurs et aux polarisateurs, aux absorbants, aux blindages et aux filtres hyperfréquences.

27. Application des copolymères selon l'une des revendications 1 à 9, aux systèmes optiques notamment aux écrans d'affichage, aux systèmes dichroïques, de diffraction ou d'absorption de rayons X ou de multiplexage sur fibres optiques.

28. Application des copolymères selon l'une des revendications 1 à 9, aux systèmes électro-magnéto-optiques et électro-magnéto-résistifs.

29. Application des copolymères selon l'une des revendications 1 à 9, aux dispositifs de contrôle du magnétisme grâce à l'ajustement de leurs propriétés magnétiques par voie chimique, par voie électrochimique, par voie mécanique, en particulier au moyen d'un matériau piézoélectrique, ou par voie thermique.

## Patentansprüche

1. Kopolymere mit magnetischen Eigenschaften, die aminoaromatische Gruppen enthalten, dadurch gekennzeichnet, daß sie auf einem Elementarmotiv beruhen, das aufweist:
- eine erste Gruppe von aminoaromatischen Verbindungen, die unter den Anilinderivaten und den entsprechenden Iminochinon-Formen ausgewählt werden,
- und eine zweite Gruppe von substituierten aminoaro matischen Verbindungen, die unter den substituierten Amino-Verbindungen mit mindestens zwei kondensierten Benzolkernen, den substituierten polyzyklischen Verbindungen mit mindestens einem Anilinmotiv in ihrer Struktur, den von Anilin abgeleiteten Verbindungen mit einem Substituenten, der über eine Ethinyliden- oder Paraphenylenbrücke mit dem Kern verbunden ist, sowie den entsprechenden Iminochinon-Verbindungen ausgewählt werden.

2. Kopolymere nach Anspruch 1, dadurch gekennzeichnet, daß sie auf dem Elementarmotiv beruhen, das die erste Gruppe B und die zweite Gruppe C enthält, die in der aminoaromatischen Form oder der entsprechenden Iminochinon-Form vorliegen können und der folgenden allgemeinen Formel entsprechen: 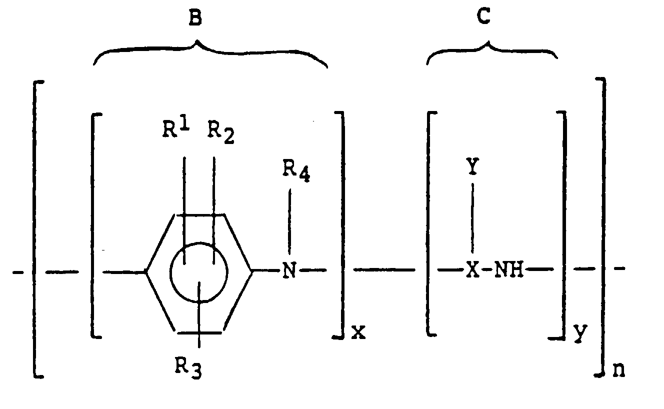 wobei in der Gruppe B gilt:
- Rᵢ mit i = 1, 2 oder 3 steht für Wasserstoff, den -CF₃-Rest und einen Substituenten der Formel -A-Z, worin A ein Kohlenwasserstoffrest mit 2 bis 8 Kohlenstoffatomen ist, in den mindestens ein Heteroatom, ausgewählt aus Sauerstoff und Schwefel eingefügt ist, während Z mindestens ein Protonendonor-Substituent oder eines seiner Salze ist,
- und R₄ wird unter Wasserstoff, einem Alkylrest, einem Arylrest und deren Derivaten ausgewählt,
wobei in der Gruppe C gilt:
- X wird ausgewählt aus einem polyaromatischen Kern mit mindestens zwei kondensierten Benzolringen, einem polyzyklischen Kern und einem aromatischen Kern, der einen über eine Ethinylidenoder Phenylenbindung an den Kern gebundenen Substituenten trägt,
- Y ist mindestens ein Substituent, der unter den Nitro-, Nitroso-, Fluor-, Chlor-, Brom-, Alkyl- und Alkoxyalkyl-Substituenten, die von einer Alkyl- oder Alkoxyalkylkette getragen werden oder nicht, sowie unter den Sulfonsäure-, Phosphonsäure- und Karbonsäure-Substituenten ausgewählt wird,
wobei in der allgemeinen Formel
- x und y ganze Zahlen zwischen 1 und 3 sind,
- und n eine möglichst große ganze Zahl größer als 6 ist.

3. Kopolymere nach einem der Ansprüche 1 und 2, dadurch gekennzeichnet, daß X ein Naphthalinkern ist.

4. Kopolymere nach einem der vorhergehenden Ansprüche, dadurch gekennzeichnet, daß sie dotiert und damit elektrisch leitend sind.

5. Kopolymere nach einem der vorhergehenden Ansprüche, dadurch gekennzeichnet, daß im Mittel ein Viertel der Gruppen B und/oder C in der Chinon-Form vorliegen.

6. Kopolymere nach einem der vorhergehenden Ansprüche, dadurch gekennzeichnet, daß im Mittel die Hälfte der Gruppen C solche vom substituierten aminoaromatischen Typ und die andere Hälfte solche vom substituierten Iminochinon-Typ sind.

7. Kopolymere nach einem der vorhergehenden Ansprüche, dadurch gekennzeichnet, daß in der allgemeinen Formel y = 1 und x = 1 gilt und daß die Bindung X-Y starr ist, wobei Y mindestens ein Protonendonor-Substituent ist und die Kopolymere im wesentlichen ferromagnetisch sind.

8. Kopolymere nach Anspruch 7, dadurch gekennzeichnet, daß Y unter einem Sulfonsäure-, Phosphonsäure- und Karbonsäure-Substituenten ausgewählt wird.

9. Kopolymere nach einem der Ansprüche 7 und 8, dadurch gekennzeichnet, daß die Gruppe C ausgewählt wird aus der Gruppe 8-Amino-2-naphthalinsulfonsäure, 5-Amino-2-naphthalinsulfonsäure, 1-Amino-5-naphthalinsulfonsäure, 1-Amino-8-naphthalinsulfonsäure, 1-Naphthylamino-5,7-disulfonsäure und 1-Naphthylamino-6,8-disulfonsäure.

10. Verfahren zur Herstellung der Kopolymere nach einem der vorhergehenden Ansprüche, dadurch gekennzeichnet, daß es aufweist:
a) einen ersten Verfahrensschritt der Kopolymerisierung in Lösung oder Suspension
- eines ersten Monomers, das ein ggf. durch den -CF₃-Rest oder durch einen Substituenten der Formel -A-Z substituiertes Anilin ist, wobei A ein Kohlenwasserstoffrest mit 2 bis 8 Kohlenstoffatomen ist, in den mindestens ein unter O und S ausgewähltes Heteroatom eingefügt ist, während Z mindestens ein Protonendonor-Substituent oder eines seiner Salze ist,
- und eines zweiten Monomers, das eine substituierte aminoaromatische Verbindung ist, die unter den substituierten Amino-Verbindungen mit mindestens zwei kondensierten Benzolkernen, den substituierten polyzyklischen Verbindungen mit mindestens einem Anilinmotiv in ihrer Struktur, den von Anilin abgeleiteten Verbindungen, die einen über eine Ethinyliden- oder Paraphenylenbrücke an den Kern gebundenen Substituenten tragen, und den entsprechenden Iminochinon-Verbindungen ausgewählt wird,
b) und einen zweiten Verfahrensschritt, in dem aus dem Reaktionsmilieu das erhaltene Kopolymer abgetrennt wird.

11. Verfahren nach Anspruch 10, dadurch gekennzeichnet, daß die Kopolymerisierung in einem sauren wässrigen Milieu durchgeführt wird, das unter den wässrigen Lösungen von Schwefelsäure, Paratoluolsulfonsäure, Ameisensäure und Phosphorsäure ausgewählt wird.

12. Verfahren nach einem der Ansprüche 10 und 11, dadurch gekennzeichnet, daß die Kopolymerisierung erfolgt, indem der Mischung der Monomere in saurem Milieu eine Lösung eines Oxidationsmittels zugefügt wird.

13. Verfahren nach Anspruch 12, dadurch gekennzeichnet, daß das Oxidationsmittel eine Verbindung aus der Gruppe ist, die die Persulfate, Bichromate, Chromate, Jodate, Permanganate und Wasserstoffperoxid enthält.

14. Verfahren nach einem der Ansprüche 10 bis 13, dadurch gekennzeichnet, daß die Oxidation in Gegenwart einer unter Spannung stehenden aktiven Elektrode und/oder eines Katalysators erfolgt.

15. Verfahren nach einem der Ansprüche 10 bis 14, dadurch gekennzeichnet, daß die Kristallisierung in einem magnetischen und/oder elektrischen Feld erfolgt.

16. Verfahren nach einem der Ansprüche 10 bis 15, dadurch gekennzeichnet, daß nach der Abtrennung des erhaltenen Kopolymers vom Reaktionsmilieu durch Filtrieren und Waschen aus diesem durch Überführung in eine ammoniakalische Lösung eine lösbare Phase extrahiert wird, worauf durch Eindampfen der ammoniakalischen Lösung das Kopolymer zum Teil umkristallisiert wird.

17. Verfahren nach einem der Ansprüche 10 bis 15, dadurch gekennzeichnet, daß nach der Abtrennung des erhaltenen Kopolymers vom Reaktionsmilieu aus dem Kopolymer durch flüssiges wasserfreies Ammoniak eine lösliche Phase extrahiert wird, worauf das Kopolymer durch Eindampfen des Ammoniaks umkristallisiert wird.

18. Verfahren zum Formen der Kopolymere nach den Ansprüchen 1 bis 9, dadurch gekennzeichnet, daß das Kopolymer in eine Suspension oder Lösung überführt wird zur Herstellung eines Ferrofluids.

19. Verfahren zum Formen der Kopolymere nach den Ansprüchen 1 bis 9, dadurch gekennzeichnet, daß das Kopolymer, das einen Protonendonor-Substituenten Y trägt, durch eine voluminöse Base, z.B. Tetraalkylammoniumhyroxid, in ein Salz verwandelt wird.

20. Verfahren zum Formen der Kopolymere nach den Ansprüchen 1 bis 9, dadurch gekennzeichnet, daß das Kopolymer portionsweise in Form einer dünnen Schicht kristallisiert wird.

21. Verfahren nach Anspruch 20, dadurch gekennzeichnet, daß die Umkristallisierung in dünner Schicht zwischen mindestens zwei von der aufgebrachten Schicht verschiedenen magnetischen Schichten erfolgt, wobei diese Schichten unter den diamagnetischen, ferromagnetischen, ferrimagnetischen und paramagnetischen Schichten ausgewählt werden.

22. Verfahren nach einem der Ansprüche 20 und 21, dadurch gekennzeichnet, daß die dünne Schicht eine Dicke im Nanometerbereich hat.

23. Anwendung der Kopolymere nach einem der Ansprüche 1 bis 9 auf Träger.

24. Anwendung nach Anspruch 23 auf fotographische und Röntgenstrahlungsträger.

25. Anwendung der Kopolymere nach einem der Ansprüche 1 bis 9 auf Tunnelmikroskope, Kernspinmikroskope, Mikroskope im Nahfeld und vom Schwundwellentyp.

26. Anwendung der Kopolymere nach einem der Ansprüche 1 bis 9 auf Mikrowellenvorrichtungen, insbesondere Hohlleiter, Zirkulatoren und Polarisatoren, Absorber, Abschirmungen und Mikrowellenfilter.

27. Anwendung der Kopolymere nach einem der Ansprüche 1 bis 9 auf optische Systeme, insbesondere Bildschirme, dichroitische Systeme, Beugungs- oder Absorptionssysteme für Röntgenstrahlen oder Multiplexiersysteme auf Lichtleitfasern.

28. Anwendung der Kopolymere nach einem der Ansprüche 1 bis 9 auf elektro-magneto-optische und elektro-magneto-resistive Systeme.

29. Anwendung der Kopolymere nach einem der Ansprüche 1 bis 9 auf Magnetismus-Kontrollvorrichtungen aufgrund der Anpassung ihrer magnetischen Eigenschaften auf chemischem Weg, auf elektrochemischen Weg, auf mechanischem Weg, insbesondere mit Hilfe eines piezoelektrischen Materials, oder auf thermischem Weg.

## Claims

1. Copolymers having magnetic properties, said copolymers containing aminoaromatic groups, and being characterized in that they are based on a structural unit comprising:
a first group of aminoaromatic compounds chosen from aniline derivatives and the corresponding iminoquinone forms; and
a second group of substituted aminoaromatic compounds chosen from substituted amino compounds containing at least two condensed benzene rings, substituted polycyclic compounds containing at least one aniline structural unit in their structure, compounds derived from aniline and carrying a substituent bonded to the ring by means of an ethynylidene or paraphenylene link, and the corresponding iminoquinone compounds.

2. Copolymers according to claim 1, characterized in that they are based on said structural unit comprising said first group B and said second group C, said groups B and C being either in the aminoaromatic form or in the corresponding iminoquinone form, and in that they satisfy the following general formula: 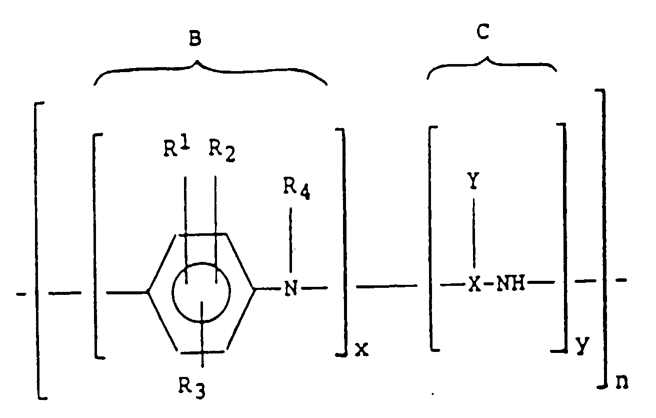 where, in said group B:
Rᵢ. where i = 1, 2, and 3, is chosen from hydrogen, the -CF₃ radical, and a substituent having the formula -A-Z, in which A is a hydrocarbon radical of 2 to 8 carbon atoms in which radical at least one heteroatom chosen from 0 and S is inserted, and Z is at least one proton donor substituent or one of the salts thereof; and
R4 is chosen from hydrogen, an alkyl radical, and aryl radical, and derivatives thereof;
in said group C:
X is chosen from a polyaromatic ring having at least two condensed benzene rings, a polycyclic ring, and an aromatic ring carrying a substituent bonded to the ring by means of an ethynylidene or phenylene link; and
Y is at least one substituent chosen from the following substituents: nitro, nitroso, fluoro, chloro, bromo, alkyl, and alcoxyalkyl, whether or not they are carried by an alkyl or alcoxyalkyl chain, and from sulfonic, phosphonic and carboxylic substituents; and
in said general formula:
x and y are integers lying in the range 1 to 3; and
n is an integer greater than 6, and as high as possible.

3. Copolymers according to any claim 1 or 2, characterized in that X is a naphthalene ring.

4. Copolymers according to any preceding claim, characterized in that they are doped, and are therefore conductive.

5. Copolymers according to any preceding claim, characterized in that, on average, one fourth of said groups B and/or C are in quinone form.

6. Copolymers according to any preceding claim, characterized in that, on average, half of said groups C are of the substituted aminoaromatic type, and the other half are of the substituted iminoquinone type.

7. Copolymers according to any preceding claim, characterized in that, in said general formula, y = 1 and x = 1, the bond X-Y is rigid, Y is at least one proton donor substituent, and in that said copolymers are mainly ferromagnetic.

8. Copolymers according to claim 7, characterized in that Y is chosen from a sulfonic, a phosphonic, and a carboxylic substituent.

9. Copolymers according to claim 7 or 8, characterized in that said group C is chosen from:
8-amino-2-naphthalenesulfonic acid;
5-amino-2-naphthalenesulfonic acid;
1-amino-5-naphthalenesulfonic acid;
1-amino-8-naphthalenesulfonic acid;
1-naphthylamino-5,7-disulfonic acid; and
1-naphthylamino-6,8-disulfonic acid;

10. A method of manufacturing copolymers according to any preceding claim, said method being characterized in that it comprises:
a first step during which the following are copolymerized, in solution or in suspension:
a first monomer which is an aniline optionally substituted with the -CF₃ radical, or with a substituent having the formula -A-Z, in which A is a hydrocarbon radical of 2 to 8 carbon atoms in which radical at least one heteroatom chosen from 0 and S is inserted, and Z is at least one proton donor substituent or one of the salts thereof; and
a second monomer which is a substituted aminoaromatic compound chosen from substituted amino compounds containing at least two condensed benzene rings, substituted polycyclic compounds containing at least one aniline structural unit in their structure, compounds derived from aniline and carrying a substituent bonded to the ring by means of an ethynylidene or paraphenylene link, and the corresponding iminoquinone compounds; and
a second step during which the resulting copolymer is separated from the reactive medium.

11. A method according to claim 10, characterized in that the copolymerization is performed in an acid aqueous medium chosen from aqueous solutions of sulfuric acid, of paratoluenesulfonic acid, of formic acid, and of phosphoric acid.

12. A method according to claim 10 or 11, characterized in that the copolymerization is performed by slowly adding a solution of an oxidizing agent to the mixture of the monomers in the acid medium.

13. A method according to claim 12, characterized in that said oxidizing agent is a compound from the group comprising persulfates. bichromates, chromates, iodates, permanganates, and oxygenated water.

14. A method according to any one of claims 10 to 13, characterized in that the oxidation is performed in the presence of a live active electrode and/or of a catalyst.

15. A method according to any one of claims 10 to 14, characterized in that the crystallization is performed in a magnetic and/or an electric field.

16. A method according to any one of claims 10 to 15, characterized in that, after separating said resulting copolymer from the reactive medium by filtering and washing, a soluble phase is extracted by dissolving said copolymer in an ammonia solution, and a portion of said copolymer is then recrystallized by evaporating said ammonia solution.

17. A method according to any one of claims 10 to 15, characterized in that, after said resulting copolymer has been separated from the reactive medium, a soluble phase is extracted from said copolymer by anhydrous liquid ammonia, and said copolymer is then recrystallized by evaporating the ammonia.

18. A method of shaping copolymers according to claims 1 to 9, characterized in that said copolymer is put in suspension or in solution to form a ferro-fluid.

19. A method of shaping copolymers according to claims 1 to 9, characterized in that said copolymer carrying a proton donor substrate Y is salified with a voluminous base such as a tetraalkylammonium hydroxide.

20. A method of shaping copolymers according to claims 1 to 9, characterized in that said copolymer is in part crystallized in a thin layer.

21. A method according to claim 20, characterized in that the thin-layer recrystallization is performed between at least two magnetic layers that are different from the deposited layer, said layers being chosen from diamagnetic, ferromagnetic, ferrimagnetic, and paramagnetic layers.

22. A method according to claim 20 or 21, characterized in that the thin layer is of nanometric thickness.

23. Use of copolymers according to claims 1 to 9 in media.

24. Use according to claim 23, in photographic and radiographic media.

25. Use of copolymers according to any one of claims 1 to 9, in tunnelling microscopes, atomic force microscopes, near-field microscopes, and evanescent-wave microscopes.

26. Use of copolymers according to any one of claims 1 to 9, in microwave devices, in particular waveguides, circulators, polarizers, absorbants, screening, and microwave filters.

27. Use of copolymers according to any one of claims 1 to 9, in optical systems, in particular display screens, dichroic systems, X-ray diffraction or absorption systems, and optical fiber multiplexing systems.

28. Use of copolymers according to any one of claims 1 to 9, in electro-magneto-optical systems, and electro-magneto-resistive systems.

29. Use of copolymers according to any one of claims 1 to 9, in devices for controlling magnetism by adjusting their magnetic properties chemically, electrochemically, mechanically, and in particular by means of a piezoelectric material, or by thermal means.
